# FASCICULE DE BREVET EUROPEEN

(11) **EP 2 828 926 B1**
(45) Date de publication et mention de la délivrance du brevet: **03.03.2021**
(21) Numéro de dépôt: 12714837.7
(22) Date de dépôt: 22.03.2012
(51) Int. Cl.: H01Q 1/10, H01Q 1/24, H01Q 3/00, H01Q 3/04, E04H 12/00, G01C 15/00, E04B 1/344, E04H 12/18, E04H 1/12, H02S 10/40, H02S 30/20

(54) **BALISE DE SURVEILLANCE**
ÜBERWACHUNGSVORRICHTUNG
MONITORING APPARATUS

(43) Date de publication de la demande: 28.01.2015
(73) Titulaire: Applications Techniques Études Réalisations Mécaniques Électroniques Systèmes, 78180 Montigny le Bretonneux (FR)
(72) Inventeur: AVIGNON, Bruno, 78530 Buc (FR); THOMAS, Lionel, 78610 Le Perray en Yvelines (FR)
(74) Mandataire: Fédit-Loriot
(86) Numéro de dépôt international: PCT/IB2012/000579
(87) Numéro de publication internationale: WO 2013/140195

(56) Documents cités:
- EP-A2- 1 865 612
- WO-A1-2007/136241
- WO-A1-2008/100955
- AU-A1- 2009 227 832
- US-A1- 2010 250 003
- US-A1- 2011 271 608

## Description

La présente invention concerne une balise de surveillance pour la détection d'intrusion. Ces balises de surveillance sont avantageusement placées au sein d'un réseau dans lequel elles sont adaptées à communiquer entre elles et avec un centre de gestion de la surveillance.

De tels réseaux de surveillance peuvent être mis en place dans de nombreuses applications, aussi bien par exemple sur un site frontalier, dans un terrain ouvert, sans clôtures, que dans un site industriel ou sur un chantier de construction de bâtiments.

Notamment dans le contexte d'une utilisation en réseau de surveillance d'un site frontalier, qui doit être installé de façon furtive pour ne pas être détecté par les potentiels intrus et de façon modulable pour pouvoir changer de configuration régulièrement et rapidement pour surprendre ces potentiels intrus, la présente invention vise à proposer une nouvelle conception de balises de surveillance adaptées à conduire une surveillance discrète mais efficace.

L'état de la technique en la matière est illustré par le document de brevet US 2010/0250003. Le document WO2008/100955 divulgue une balise de surveillance qui comporte un mât téléscopique, des appareils disposés sur le mât et des panneaux solaires attachés sur la balise.

L'invention propose à cet effet une balise de surveillance pour la détection d'intrusion qui comporte une base d'assise au sol sur laquelle est rapporté un mât à déploiement télescopique qui porte à une extrémité une tête de détection. Des structures support de panneaux solaires sont montées pivotantes par rapport à cette base d'assise, de telle sorte que la balise peut prendre soit une position de transport, dans laquelle les structures support sont dressées pour former une cage protectrice, soit une position d'utilisation dans laquelle les structures support sont rabattues à plat autour de la base de manière à dégager le mât et la tête de détection associée.

Ainsi, chaque balise d'un réseau de surveillance donné peut présenter une position de transport dans laquelle le mât et la tête de détection sont protégés à l'intérieur de la cage protectrice et une position d'utilisation dans laquelle les panneaux solaires sont déployés et rendent la balise autonome énergétiquement quand ils sont exposés à la lumière. On comprend que l'on passe facilement d'une position à l'autre par la manipulation de ces structures support, ce qui est particulièrement intéressant dans le cadre de l'utilisation d'une telle balise dans un réseau de surveillance à configuration modulable et déploiement rapide.

Selon des caractéristiques complémentaires particulièrement avantageuses, la balise de l'invention comporte des moyens de communication avec un centre de gestion et ces moyens de communication comprennent notamment une antenne mobile directive, qui présente un gain électromagnétique important et qui est rapportée sur le mât télescopique par l'intermédiaire d'une tourelle montée à rotation autour de l'axe de déploiement de ce mât. Par ailleurs, la tête est montée articulée à l'extrémité du mât, de manière indépendante de la rotation de l'antenne mobile. Ainsi, en cas de détection d'intrus, l'antenne peut être orientée vers le centre de gestion lorsque la balise est en position déployée, et ce indépendamment de l'orientation de la tête qui continue de cibler les intrus potentiels. On prévoit en outre que l'antenne mobile s'étend le long du mât télescopique, et qu'un logement est disposé dans la base d'assise au sol pour recevoir partie de l'antenne lorsque le mât est rétracté. On peut ainsi escamoter au maximum l'antenne lorsque que la balise est en position de transport pour faciliter sa manutention.

Dans un mode de réalisation préféré pour la mise en œuvre de l'invention, une antenne fixe, qui s'étend en saillie verticale de la base à côté du mât, forme des moyens de communication distincts de ceux formés par l'antenne mobile, l'antenne fixe étant adaptée à émettre et recevoir des informations à bas débit de manière continue tandis que l'antenne mobile n'est activée qu'en fonction desdites informations, pour émettre des informations à haut débit. Ainsi, on évite l'alimentation continue de l'antenne mobile alors qu'elle est destinée à émettre à haut débit, de sorte que l'on favorise l'autonomie énergétique de la balise.

Selon une caractéristique secondaire de l'invention, des pieds sont articulés sur la base pour que la balise ne repose pas sur le soi uniquement par la paroi de fond de la base, de manière à optimiser l'assise de la base, et ces pieds comportent une tige réglable qui permet d'assurer le réglage du niveau horizontal de la base. Cette mise à niveau permet à la tête de détection et d'identification de couvrir la scène avec un mouvement panoramique à plat. En outre, on évite ainsi les reflets du soleil sur les plaques de capteur qui pourraient rendre la balise détectable.

Selon une caractéristique de l'invention, la structure support est recouverte d'une tôle d'habillage. Dans la position d'utilisation de la balise, les panneaux solaires sont disposés au-dessus de leur structure support et la tôle d'habillage est au-dessous de cette structure. Dans la position de transport de la balise, les panneaux solaires sont orientés vers l'intérieur de la balise et la tôle d'habillage est orientée vers l'extérieur de la balise. Ainsi, les tôles d'habillage servent de carénage lorsque la balise est dans la position de transport, ce qui permet sa manutention et son transport sans risquer de détériorer les composants internes de la balise ou les panneaux solaires. Et ces mêmes tôles se retrouvent sous les panneaux solaires lorsque ceux-ci sont exposés, de manière à ne pas gêner la captation de l'énergie solaire.

Selon une caractéristique de l'invention, des panneaux solaires sont empilés sur deux côtés opposés, et la structure support sur ces deux côtés opposés comporte des bras déployables de part et d'autre de la structure lorsque celle-ci est rabattue, pour servir de support à chacun des panneaux après désempilage. On peut ainsi augmenter la surface des panneaux solaires et améliorer l'autonomie de- la balise lorsqu'elle est dans la position d'utilisation, sans pour autant devoir augmenter le volume de la balise lorsque celle-ci est en position de transport.

Selon une autre caractéristique de l'invention, les structures support sur deux côtés opposés de la balise comportent à leur extrémité opposée à la base un volet articulé qui forme béquille lorsque la structure support est rabattue et qui forme partie d'un capot supérieur de la cage protectrice lorsque la structure support est dressée.

Il résulte des différentes caractéristiques de l'invention telles qu'évoquées précédemment et telles que décrites plus en détail par la suite que la balise de surveillance selon l'invention est ainsi un robot autonome en énergie et en traitement de l'information, intégré dans un réseau de communication et simulant en l'optimisant le comportement d'une sentinelle humaine.

L'invention concerne également un réseau de balises de surveillance vidéo telles que décrites précédemment avec dans leur tête un appareil de prise de vue et un dispositif d'éclairement intense, de type flash photographique, ce *réseau étant* particulier en ce que l'on utilise pour l'identification d'un intrus dans une zone déterminée l'appareil de prise de vue de l'une des balises du réseau en utilisant simultanément le dispositif d'éclairement d'une autre balise du réseau, les deux têtes de balise étant orientées vers cette zone déterminée. Ainsi, on fait travailler les balises en mode coopératif lorsque la balise détecte un intrus dans des conditions de faible visibilité, comme la nuit ou le brouillard. On reproduit l'effet optique de l'imagerie active sans la complexité de la synchronisation temporelle ultra précise de la source de lumière. La vidéo issue de la caméra intégrée également dans la tête de détection et d'identification est elle aussi exploitable en identification de l'intrus malgré sa résolution plus faible, notamment pour l'obtention d'informations sur le comportement du sujet.

D'autres caractéristiques et avantages de l'invention ressortiront à la lecture de la description qui suit d'un de ses modes de réalisation, illustrée par :
- la figure 1 est une vue en perspective de la balise de surveillance selon l'invention en position fermée ;
- la figure 2 est une vue, similaire à la figure 1, de la balise en position de transport, avec une tôle d'habillage cachée pour rendre visible la première des trois plaques de panneaux solaire empilées et logées sous cette tôle ;
- la figure 3 est une vue, similaire aux figures 1 et 2, avec cette fois les trois plaques de panneaux solaires empilées qui sont cachées pour rendre visible le mât télescopique, les antennes et la tête de détection ;
- la figure 4 est une vue en perspective, de dessous, de la balise dans sa position d'utilisation ;
- la figure 5 est une vue en perspective, de dessus, de cette balise dans cette position d'utilisation ;
- les figures 6 et 7 sont des vues du mat télescopique et de l'antenne mobile associée, avec et sans tête de détection ;
- et la figure 8 est une vue de dessus représentant en perspective le mât et la base d'assise au sol de la balise, sans la structure support des plaques de panneaux solaires, le carter recouvrant la base étant ici caché pour laisser apparaître les composants électroniques présents dans la basse d'assise au sol et représentés schématiquement.

Tel qu'illustrée sur ces figures, la balise de surveillance 2 comporte une base d'assise au sol 4, un mât à déploiement télescopique 6 qui est rapporté sur cette base et une tête de détection 8 montée en extrémité de ce mât. La balise comporte en outre des structures support de panneaux solaires 10.

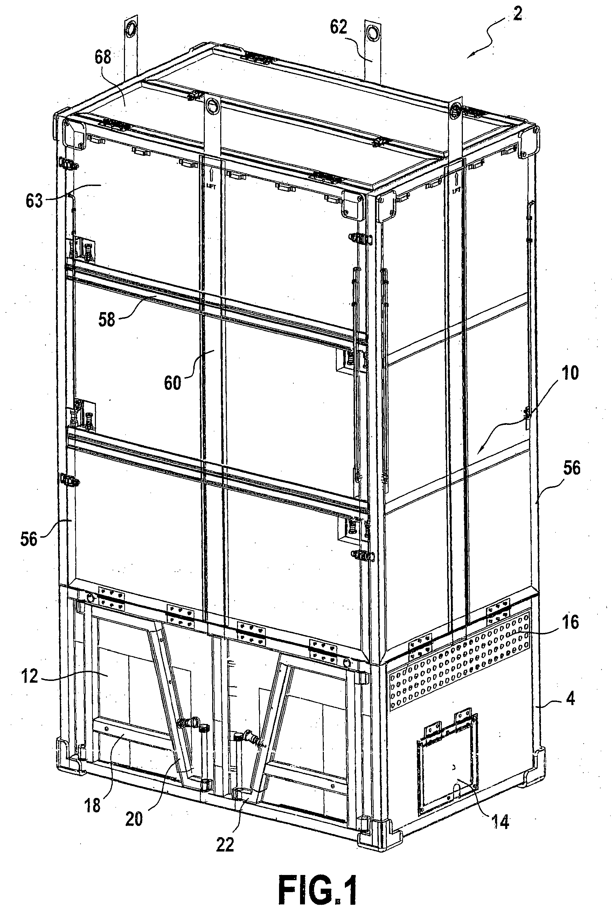

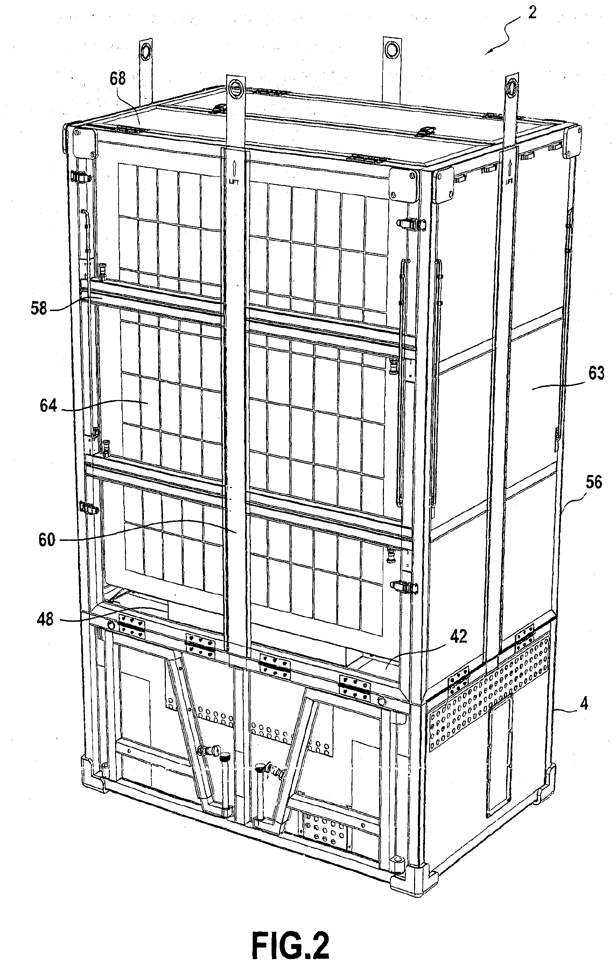

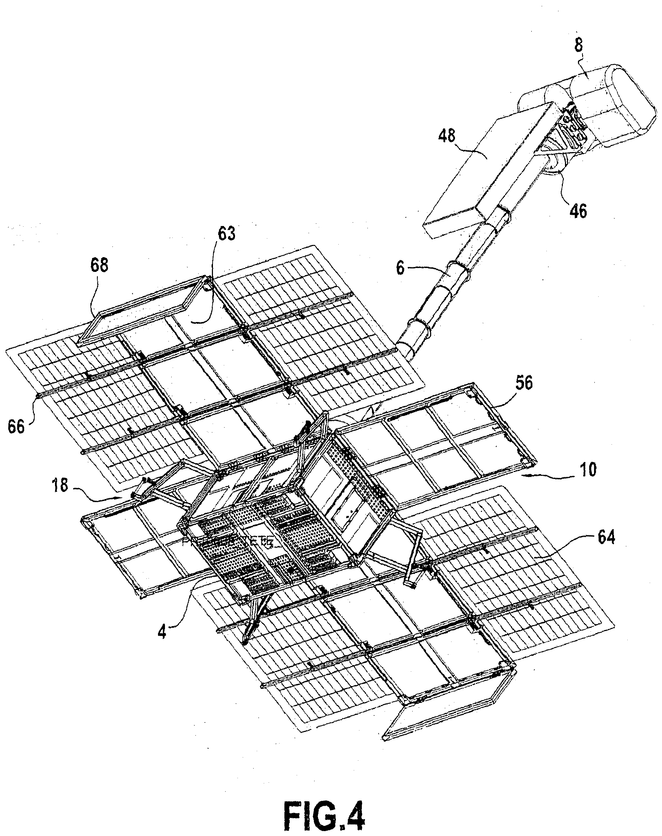

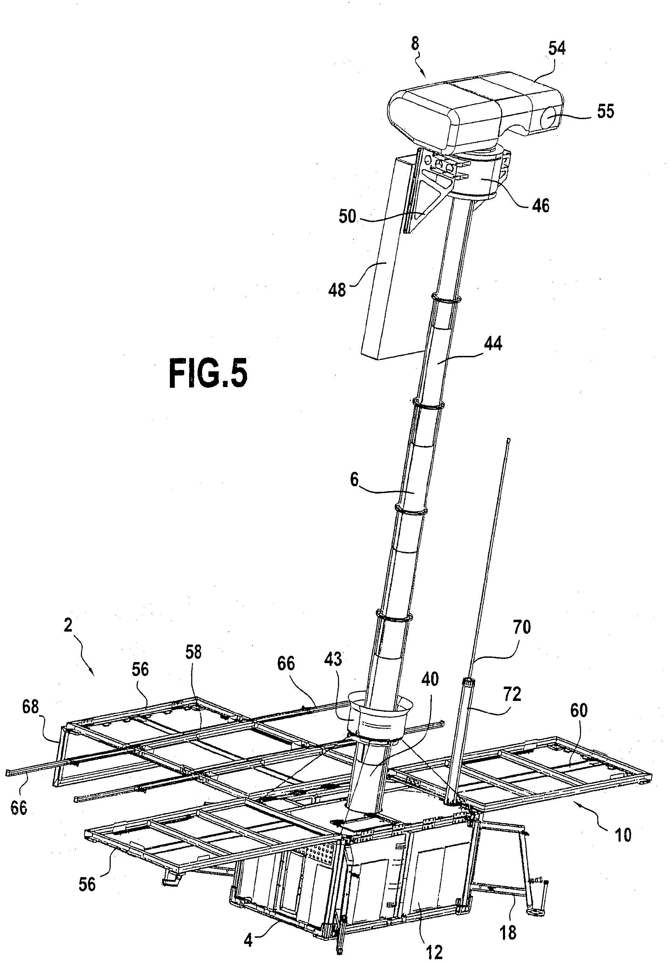

Cette balise est adaptée à prendre une position de transport (visible sur les figures 1 à 3), dans laquelle les structures support forment une cage protectrice, ou à prendre une position d'utilisation (visible sur les figures 4 et 5), dans laquelle les structures support sont rabattues à plat pour être disposées horizontalement autour de la base de manière à dégager le mât et la tête de détection associée.

Dans la position de transport de la balise, les structures support sont dressées verticalement pour former la cage protectrice et le mât est rétracté de manière à ce que la tête soit escamotée à l'intérieur de cette cage protectrice. Et dans la position d'utilisation de la balise, le mat est déployé et les structures support sont rabattues.

La base d'assise au sol 4 est formée d'un bac rectangulaire, ouvert sur le dessus et comportant quatre parois latérales 12 et une paroi de fond. Sur ces parois latérales, on aménage des trappes d'accès 14 à l'intérieur de la base d'assise et des grilles d'aération 16. Quatre pieds 18 sont rapportés sur les parois latérales, chacun comportant un support 20 monté pivotant sur une paroi latérale de manière à pouvoir être plaqué contre la paroi latérale de la base d'assise dans la position de transport (comme visible sur les figures 1 à 3) et pouvoir être déployé en saillie de la base (comme visible sur les figures 4 et 5) pour assurer la stabilité de la balise. Chaque pied comporte une tige réglable 22 adaptée à coulisser à l'intérieur d'un élément creux du support formé à l'opposé de l'axe d'articulation du pied sur la base, et des moyens de blocage sont adaptés à arrêter la tige en translation par rapport à cet élément creux.

La base d'assise au sol loge des composants électroniques parmi lesquels on trouve des batteries 24, un coffret électronique 26 renfermant les calculateurs et les outils de gestion des réseaux de communication, un coffret 28 renfermant les moyens adaptés à transformer et collecter l'énergie en provenance des capteurs solaires, un réservoir d'air 30 et un compresseur pour le déploiement du mât télescopique, un module de calcul optoélectronique 34 adapté à traiter l'image tridimensionnelle, un boîtier de transmission VHF 36 pour les échanges bas débit et un transmetteur UHF pour les communications haut débit, ainsi que des moyens d'interface homme machine 38. La balise est par ailleurs avantageusement dotée d'une pile à combustible qui permet un apport d'énergie lorsque les conditions d'ensoleillement sont défavorables.

Ces différents composants sont disposés dans la base, d'assise, autour d'un fût fixe 40 qui s'étend depuis la paroi de fond de la base d'assise au sol et qui dépasse verticalement de cette base. Un carter 42, disposé sur la base d'assise au sol pour former une paroi supérieure de protection des composants électroniques, est formé de deux demi-carters présentant un découpage pour enserrer le fût. Ce carter porte avantageusement sur sa face interne une mousse isolante pour protéger au mieux les composants électroniques.

Le mât télescopique est formé de ce fût fixe, à l'extrémité supérieure duquel est rapporté un entonnoir 43, et de tiges de déploiement 44 imbriquées les unes dans les autres et adaptées à se déplier l'une par rapport à celle dans laquelle elle est imbriquée.

La tige de plus petit diamètre porte à son extrémité libre une tourelle 46 qui supporte à la fois une antenne mobile 48 et la tête de détection 8.

La tourelle est montée pivotante par rapport à l'axe de déploiement du mât télescopique. Elle comporte un carter cylindrique de section circulaire sur la paroi extérieure duquel sont fixées des équerres 50 de support de l'antenne mobile, qui est ainsi rendue solidaire en rotation de la tourelle. Le carter de la tourelle renferme les moyens motorisés nécessaires pour permettre la rotation commandée de l'antenne via la tourelle en réponse à des instructions en provenance des composants électroniques qui remontent depuis la base d'assise au sol par des câbles courant à l'intérieur de la tige de plus petit diamètre du mât. La tourelle porte en outre la tête de détection, montée avec deux degrés de liberté en rotation via des moyens d'articulation 52 disposés au sommet de la tourelle, à l'opposé du mât. L'ensemble des moyens d'articulation est monté pivotant autour de l'axe de déploiement du mât télescopique, de manière à ce que la tête de détection puisse tourner à 360°, et un axe transversal 53 est adapté à entraîn er l'inclinaison vers le haut ou vers le bas de la tête de détection.

La tête de détection comporte un carter de protection 54 à l'intérieur duquel sont logés notamment des moyens de prise de vue, caméra ou appareil photo, un dispositif de flash pour l'éclairage de la zone à photographier, un télémètre à pointeur laser, un chercheur de nord et un système de localisation par satellite. Le carter présente des éléments de paroi vitrés 55 pour permettre ces prises de vue ou ces mesures.

Comme cela a été précisé précédemment, le mât télescopique, est adapté à prendre une position déployée, avec les tiges formant le mât qui sont étendues, ou une position rétractée. La position déployée du mât est rendue possible par le dégagement préalable des structures support en position rabattue, et elle rend la balise pleinement opérationnelle, à la fois en détection d'intrus et en communication avec le centre de gestion puisque la tête de détection et l'antenne mobile sont alors dégagées. La position rétractée du mât et l'escamotage de la tête qui en découle permet d'obtenir une position de transport de la balise dans laquelle les structures support 10 s'étendent verticalement pour former la cage protectrice.

Chaque structure support comporte un cadre 56 monté articulé sur le sommet de l'un des côtés de la base d'assise, et elle comporte des rails 58 et une glissière 60. Les rails s'étendent transversalement au cadre et parallèlement à l'axe d'articulation du cadre sur la base, et la glissière s'étend perpendiculairement à ces rails au centre du cadre. La glissière présente une forme en Oméga qui est adaptée à recevoir une sangle de levage 62 pour la manutention de la balise.

Une tôle d'habillage 63 est rapportée contre le cadre, sur une face de la structure support, et une plaque de panneaux solaires 64 est rapportée sur la face opposée de cette structure. Avantageusement, sur les structures support des deux côtés opposés de plus grande longueur, trois couches de panneaux solaires sont empilées les unes sur les autres.

Le cadre de la structure est monté articulé de manière à passer de la position verticale, dans laquelle la tôle d'habillage est tournée vers l'extérieur de la balise de manière à former une paroi de la cage protectrice, à une position rabattue à plat dans laquelle les panneaux solaires 64, rapportés contre le cadre sur la face orientée vers l'intérieur de la balise lorsque la balise est en position de transport, sont exposés à la lumière pour l'acquisition de l'énergie solaire et l'alimentation électrique de la balise via les moyens de transformation de l'énergie solaire présents dans la base d'assise.

Les structures support sur les deux côtés opposés de plus grande longueur comportent des rails horizontaux particuliers en ce qu'ils présentent des éléments télescopiques 66 adaptés à s'étendre latéralement en saillie du cadre dans le prolongement du rail horizontal correspondant. Tel que cela est visible sur les figures 4 et 5, et notamment sur la figure 5 où les panneaux solaires ont été cachés, les rails horizontaux comportent deux jeux d'éléments télescopiques de manière à ce qu'ils s'étendent de part et d'autre du cadre. On forme alors une surface de support de panneaux solaires agrandie adaptée à recevoir les trois couches de panneaux solaires après qu'ils aient été désempilés.

Sur ces deux côtés opposés, la structure support présente en outre un volet 68 articulé sur le cadre, à l'extrémité opposée de la base d'assise. Dans la position de transport de la balise, les deux volets se rabattent l'un vers l'autre pour former une paroi supérieure de la cage protectrice.

La position à plat des structures est obtenue par butée des charnières d'articulation disposées entre le cadre et le bord correspondant de la base d'assise au sol. En outre, les volets articulés, montés libres en rotation par rapport au cadre, sont adaptés à reposer contre le sol lorsque les structures sont à plat et ils forment des béquilles permettant de soulager les charnières du poids de la structure et des panneaux solaires.

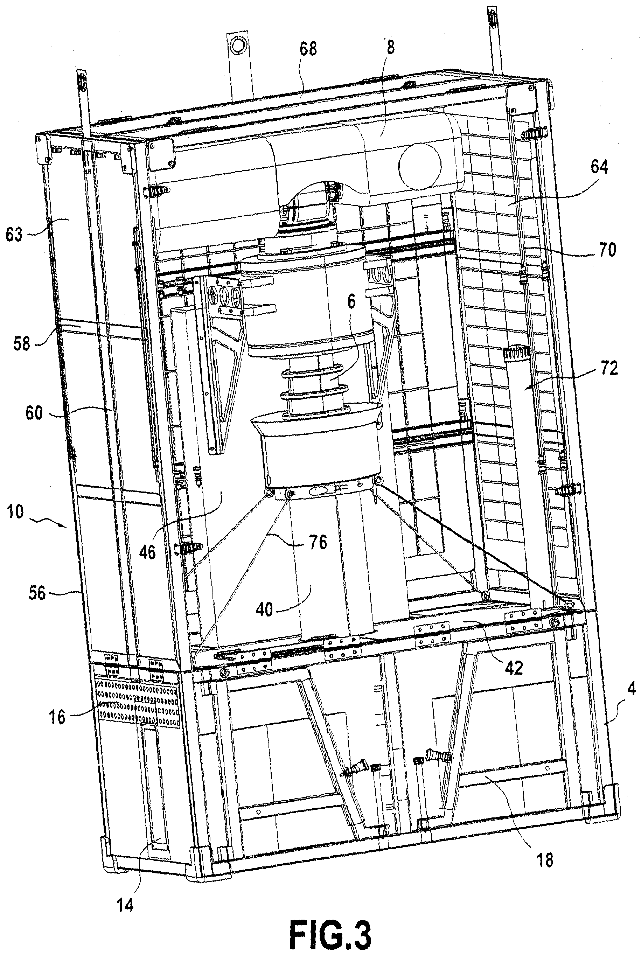

Une antenne fixe 70 est rapportée sur la base d'assise au sol par l'intermédiaire d'une équerre de support. Cette antenne fixe est ici une antenne tige qui s'étend verticalement au-dessus d'un corps d'antenne 72, et la tige d'antenne présente une dimension axiale inférieure à la hauteur des structures formant les parois de la cage protectrice quand la balise est en position de transport. La tige d'antenne peut ainsi être rangée à l'intérieur de la cage protectrice (comme visible sur la figure 3) et elle peut facilement être vissée sur le corps pour s'étendre suffisamment en saillie de la base pour émettre dans la position d'utilisation de la balise (comme visible sur la figure 5).

On va maintenant décrire le fonctionnement de la balise selon l'invention.

Les balises sont embarquées sur un véhicule et amenées chacune à un emplacement déterminé par un centre de gestion et son outil de configuration du réseau. Une balise est alors soulevée par un bras de manutention sur lequel un opérateur accroche les sangles de levage.

Une fois la base d'assise posée au sol et les sangles décrochées, l'opérateur fait pivoter chacun des pieds par rapport aux parois latérales. L'opérateur peut faire coulisser les tiges réglables par rapport au support creux de chaque pied, pour que l'extrémité de ces tiges entre en contact avec le sol de manière à assurer la stabilité et l'horizontalité de l'ensemble. L'opérateur bloque alors les tiges en translation. Avantageusement, l'opérateur peut régler ie coulissement des tiges dans le support creux de chaque pied de manière à assurer une assise horizontale de l'ensemble malgré le profil accidenté du terrain sur lequel la balise est posée. On pourra prévoir un niveau intégré dans la base d'assise pour contrôler cette assise horizontale.

L'opérateur déverrouille un à un les crochets qui maintiennent en position les structures support en libérant tout d'abord les structures latérales, de plus petites dimensions, puis en déverrouillant les structures de plus grandes dimensions retenues au sommet de la balise par l'accrochage respectif de leur volet.

Les structures sont rabattues à plat, bloquées dans cette position par les butées des charnières. Puisque l'assise horizontale de la base a été assurée préalablement, les structures sont ainsi disposées horizontalement ainsi que les panneaux solaires qu'elles supportent ce qui est particulièrement important dans la gestion des reflets lumineux sur ces panneaux qu'il faut essayer de rendre le moins pénalisant possible. L'opérateur pivote le volet en extrémité de ces structures support pour le placer en appui contre le sol (figure 5).

On observe que dès lors que les structures sont rabattues, le mât peut être déployé et les moyens de communication sont opérationnels.

Une fois les structures rabattues à plat, l'opérateur déplace les rails télescopiques de part et d'autre des structures de grand côté de manière à former des structures d'appoint. Il désempile alors les trois couches de panneaux solaires sur chacune des structures de grand côté et il dispose les deux couches supérieures sur l'une et l'autre des structures d'appoint. On compte alors huit panneaux solaires, disposés régulièrement autour du mât télescopique. La répartition physique des cellules solaires ainsi que leur mise en série électrique est spécialement étudiée pour que l'ombre portée du mât n'handicape pas la production d'énergie.

Les opérations de déploiement de la balise sont alors terminées, et cette balise se retrouve dans une position d'utilisation avec un mât télescopique déployé porteur d'une antenne mobile et d'une tête de détection, ainsi qu'une antenne fixe dégagée. Dans cette position d'utilisation, les panneaux solaires sont exposés, à plat et le carter protège l'intérieur de la base d'assise et les composants électroniques qu'elle contient.

Lors des opérations de surveillance, il peut être nécessaire de rétracter le mât et d'escamoter la tête de détection, soit pour des raisons de furtivité, soit pour des raisons de sécurité du fait des conditions météorologiques mauvaises par exemple, pour la détection desquelles la balise peut comporter un anémomètre. Dans ce cas, on observe que l'antenne mobile est en partie disposée à l'intérieur de la base, dans un logement 74 prévu à cet effet. Un détecteur capacitif 75 est disposé à proximité de ce logement pour délivrer une information relative à la présence de l'antenne mobile dans le logement. Les mouvements télescopiques du mât génèrent dans un sens et dans l'autre des efforts sur le mât qui sont repris par des câbles 76 reliant l'entonnoir 43 aux quatre coins de la base.

Avantageusement, l'antenne fixe émet en continu, des informations sur sa position par exemple, de façon multidirectionnelle, de sorte que le centre de gestion reçoit ces informations et les traite en temps réel dans son outil de configuration du réseau. Lorsque la balise détecte un intrus, c'est cette antenne fixe qui transmet l'information brute de détection. Simultanément, cette information génère l'acquisition d'images complémentaires de la zone correspondant à l'apparition de l'intrus potentiel par les moyens de prise de vue dans la tête de détection, et elle génère aussi l'orientation de l'antenne mobile directive à fort gain vers le centre de gestion pour envoyer les images acquises.

Le montage de l'antenne sur la tourelle permet de faire tourner l'antenne indépendamment de l'orientation de la tête de sorte que celle-ci peut rester braquer sur la zone à surveiller tandis que l'antenne tourne.

Le déclenchement à la demande de l'antenne permet d'économiser de l'énergie. L'envoi d'informations vidéo par cette antenne mobile est plus exigeant en ressources énergétiques que l'envoi d'informations texte par l'antenne fixe et il est dès lors particulièrement, intéressant de ne déclencher l'émission par l'antenne mobile que lorsqu'une intrusion potentielle est détectée.

Les balises sont disposées en réseau de manière à pouvoir surveiller l'ensemble d'une zone déterminée. La configuration du réseau est initialement calculée par un outil de calcul implémenté dans le centre de gestion, et une place est attribuée à chacune des balises. En fonction des informations échangées de façon continue entre chaque balise, par leur antenne fixe, et le centre de gestion, la configuration du réseau peut évoluer en temps réel : les balises peuvent être changées de position, notamment les balises restant à installer et toujours embarquées sur le véhicule, ou bien le fonctionnement des moyens de détection propres de chaque balise peut être modifié à distance.

Notamment dans le cadre de la disposition en réseau des balises dans des paysages montagneux où la perspective n'est pas linéaire, les balises doivent être calibrées de nouveau au moment de leur dépose au sol pour s'assurer que les critères de détection, auxquels se réfèrent les moyens de traitement d'image tridimensionnelle de la balise et qui font référence à des données de cartographie théoriques, sont toujours cohérents. Le télémètre laser permet alors de pointer un élément du décor et de communiquer au centre de gestion via l'antenne fixe la distance à laquelle la balise se trouve de cet élément du décor. Le centre de gestion prend cet élément en compte pour déterminer si les critères de détection doivent changer, et par exemple la taille des pixels à détecter sur les prises de vue.

La disposition en réseau est particulièrement utile lorsqu'une balise a détecté un potentiel intrus la nuit ou par temps de brouillard. Il est alors souhaité de procéder à une imagerie active de la zone qui consiste en une prise de vue et un éclairage par lumière intense. Selon l'invention, un mode coopératif est mis en place entre plusieurs balises pour que l'éclairage soit réalisé par les moyens d'éclairement intense d'une balise et pour que les prises de vue soient réalisées depuis une autre balise. Le centre de gestion reçoit une information d'une intrusion éventuelle et l'existence d'une visibilité réduite, par l'intermédiaire de capteurs de luminosité embarqués sur la balise par exemple. On procède à une estimation de la zone déterminée dans laquelle a lieu l'intrusion détectée par un pointage laser par le télémètre de la balise qui a réalisé la détection d'intrusion. L'information est communiquée aux balises, directement ou par le centre de gestion, grâce à l'antenne fixe et chacune des balises voisines met en marche son dispositif d'éclairement pour l'éclairage intense de cette zone déterminée. On réalise ainsi une imagerie active sans que soit nécessaire des opérations de synchronisation temporelle fine qui seraient nécessaires si le flash et la prise de vue étaient réalisés depuis la même balise.

A la lecture de ce qui précède, on constate aisément que l'invention atteint bien les buts qu'elle s'est fixés, et qu'il est inutile de rappeler entièrement. Notamment, l'invention permet de réaliser un réseau de surveillance modulable utilisant de multiples points de vue redondants, à la configuration pouvant évoluer en cours de mission, avec des balises de surveillance faciles à déplacer, autonomes énergétiquement et adaptées à communiquer entre elles et avec un centre de gestion du réseau de façon optimisée par rapport à cette autonomie énergétique, et dans le respect d'une performance de détection optimale. Le fait de passer facilement d'une position de transport parfaitement sûre pour l'intégrité des composants, notamment par la présence des tôles d'habillage protégeant les panneaux solaires, à une position d'utilisation permet de favoriser l'usage d'une telle balise dans un réseau de surveillance à configuration modulable et rapidement déployable par des opérateurs peu qualifiés. Par ailleurs, le fait d'éviter l'alimentation continue de l'antenne mobile favorise, l'autonomie énergétique de la balise qui est optimisée par la surface importante de panneaux solaire exposés. Ceci est obtenu avec un volume maîtrisé de la balise lorsqu'elle est transportée de sorte que plusieurs balises peuvent facilement être transportées lors du déploiement du réseau de surveillance le long du site à surveiller.

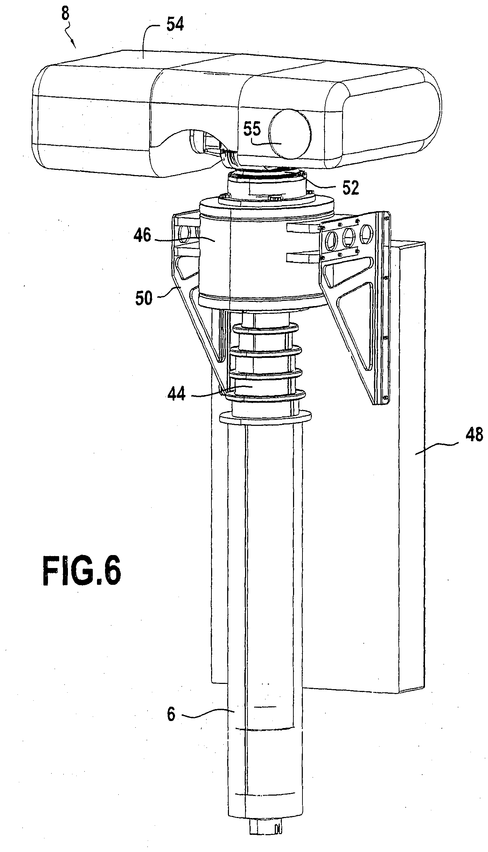

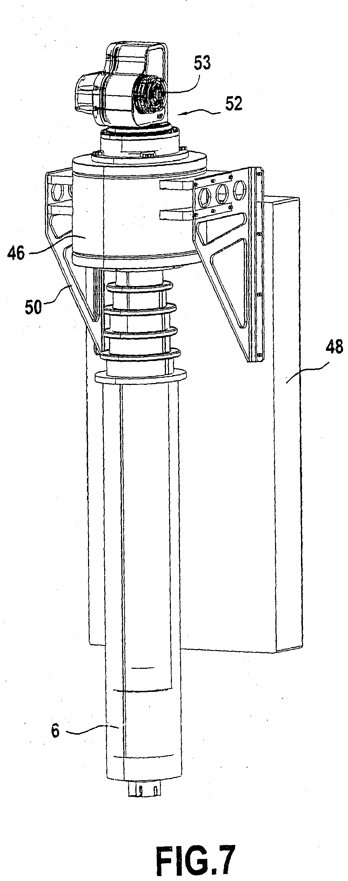

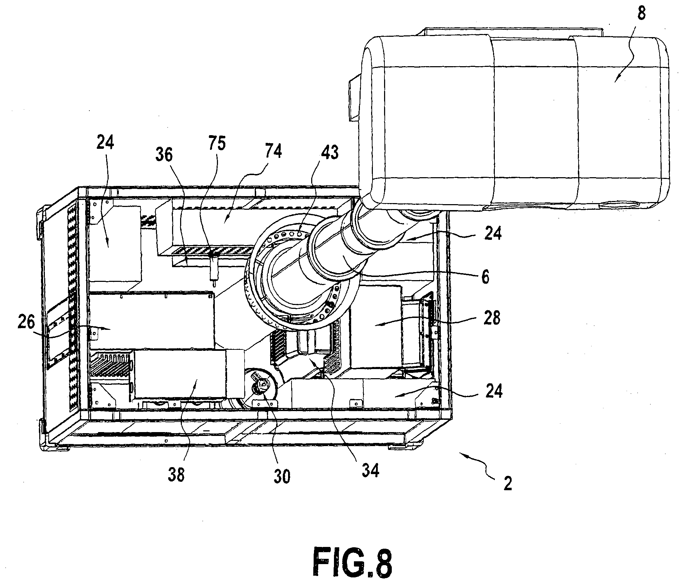

On comprendra que l'invention n'est pas limitée aux seuls dispositifs conformes au mode de réalisation explicitement décrit en regard des figures 1 à 8, ni seulement à l'application préférée relative à l'utilisation de la balise dans un réseau de surveillance de sites frontaliers montagneux. Sans sortir du cadre de l'invention, le dispositif s'applique à tout type de surveillance dans laquelle la mobilité et la furtivité de la balise selon l'invention sont utiles. De même, la balise pourra présenter des variantes par exemple dans le nombre et les fonctionnalités des composants électroniques présents.

## Revendications

1. Balise de surveillance qui comporte une base d'assise au sol (4) sur laquelle est rapporté un mât à déploiement télescopique (6), ainsi qu'une tête de détection d'intrusion (8) montée à une extrémité dudit mât, **caractérisée en ce que** la balise de surveillance comprend des structures support de panneaux solaires (10) étant montées pivotantes sur la base d'assise au sol, ladite balise étant configurée pour prendre une position de transport, dans laquelle lesdites structures support de panneaux sont dressées pour former une cage protectrice de la balise, des panneaux solaires rapportés au-dessus desdites structures support étant alors orientés vers l'intérieur de la balise , et une position d'utilisation, dans laquelle lesdites structures sont rabattues à plat autour de la base d'assise au sol de manière à dégager le mât (6) et la tête de détection associée (8), lesdits panneaux solaires étant alors exposés ;
ladite balise comportant des moyens de communication avec un centre de gestion parmi lesquels une antenne mobile (48) qui est rapportée sur le mât télescopique (6) par l'intermédiaire d'une tourelle (46) montée à rotation autour dudit mât, et **en ce que** ladite tête de détection (8) est montée articulée à l'extrémité du mât de manière indépendante de ladite antenne mobile ;
l'antenne mobile (48) s'étendant le long du mât télescopique (6), un logement (74) étant prévu dans ladite base d'assise au sol (4) pour recevoir partie de l'antenne lorsque le mât est escamoté ; et
ladite balise de surveillance comprenant un détecteur capacitif (75) disposé à proximité dudit logement (74) et configuré pour délivrer une information relative à la présence de l'antenne mobile dans ledit logement (74).

2. Balise selon la revendication 1, **caractérisée en ce que** les moyens de communication comportent en outre une antenne fixe (70) qui est configurée pour émettre et recevoir en continu des informations bas débit tandis que l'antenne mobile (48) n'est activée qu'en fonction desdites informations pour émettre des informations à haut débit.

3. Balise selon la revendication 1 ou 2, **caractérisée par** des pieds (18) montés articulés sur la base d'assise au sol (4) et qui comportent respectivement une tige réglable (22) pour assurer le niveau horizontal de la base.

4. Balise selon une des revendications 1 à 3, **caractérisée en ce que** chaque structure support de panneaux solaires (10) est recouverte d'une tôle d'habillage (63) qui est rapportée au-dessous de la structure, de sorte que dans la position d'utilisation de la balise, ladite tôle se retrouve sous les panneaux solaires (64) lorsque ceux-ci sont exposés, alors que dans la position de transport de la balise, où les panneaux solaires sont orientés vers l'intérieur de la balise, la tôle d'habillage est orientée vers l'extérieur de la balise.

5. Balise selon la revendication 4, **caractérisée en ce que** des panneaux solaires (64) sont empilés sur une même structure support déterminée (10), dans la position de transport de la balise, et **en ce que** ladite structure support déterminée comporte des éléments déployables (66) de part et d'autre de la structure lorsque celle-ci est déployée en position d'utilisation de la balise , pour servir de structure d'appoint pour chacun des panneaux solaires initialement empilés.

6. Balise selon la revendication 4 ou 5, **caractérisée en ce que** sur deux côtés opposés de ladite balise, la structure de support (10) comporte à son extrémité opposée à la base d'assise au sol (4) un volet (68) articulé qui forme béquille lorsque la structure support est rabattue dans la position d'utilisation de la balise, et qui forme partie d'un capot supérieur de la cage protectrice lorsque la structure support est dressée dans la position de transport de la balise.

7. Réseau de balises de surveillance (2) selon l'une des revendications 1 à 6 dans lequel la tête de détection (8) comporte un appareil de prise de vue et un dispositif d'éclairement intense, l'appareil de prise de vue de l'une des balises du réseau étant utilisée en utilisant simultanément le dispositif d'éclairement d'une autre balise du réseau, les deux balises étant orientées vers un même point de surveillance.

## Patentansprüche

1. Überwachungsvorrichtung, die eine Bodenauflagebasis (4), auf der ein teleskopisch ausfahrbarer Mast (6) angesetzt ist, sowie einen Eindringdetektionskopf (8) umfasst, der an einem Ende des Mastes montiert ist, **dadurch gekennzeichnet, dass** die Überwachungsvorrichtung Stützstrukturen (10) für Solarpaneele umfasst, die an der Bodenauflagebasis schwenkbar gelagert sind, wobei die Vorrichtung so ausgestaltet ist, dass sie eine Transportposition, in der die Paneelstützstrukturen so aufgestellt sind, dass sie einen Schutzkäfig der Vorrichtung bilden, wobei Solarpaneele, die über den Stützstrukturen angesetzt sind, dann hin zum Inneren der Vorrichtung ausgerichtet sind, und eine Verwendungsposition einnimmt, in der die Strukturen derart flach um die Bodenauflagebasis herum heruntergeklappt sind, dass der Mast (6) und der zugehörige Detektionskopf (8) freiliegen, wobei die Solarpaneele dann exponiert sind;
wobei die Überwachungsvorrichtung Mittel zur Kommunikation mit einem Verwaltungszentrum, darunter eine bewegliche Antenne (48), umfasst, die an dem Teleskopmast (6) über einen Drehkranz (46) angesetzt ist, der um den Mast herum drehbar gelagert ist, und dadurch, dass der Detektionskopf (8) auf von der beweglichen Antenne unabhängige Weise am Ende des Mastes gelenkig gelagert ist;
wobei die bewegliche Antenne (48) sich entlang des Teleskopmastes (6) erstreckt, wobei eine Aufnahme (74) so in der Bodenauflagebasis (4) vorgesehen ist, dass ein Teil der Antenne aufgenommen ist, wenn der Mast eingezogen ist; und
wobei die Überwachungsvorrichtung einen kapazitiven Detektor (75) umfasst, der in der Nähe der Aufnahme (74) angeordnet ist und so ausgestaltet ist, dass er eine Information bezüglich des Vorhandenseins der beweglichen Antenne in der Aufnahme (74) liefert.

2. Vorrichtung nach Anspruch 1, **dadurch gekennzeichnet, dass** die Kommunikationsmittel ferner eine feste Antenne (70) umfassen, die so ausgestaltet ist, dass sie kontinuierlich Informationen mit niedriger Datenrate sendet und empfängt, während die bewegliche Antenne (48) nur in Abhängigkeit von den Informationen aktiviert wird, um Informationen mit hoher Datenrate zu senden.

3. Vorrichtung nach Anspruch 1 oder 2, **gekennzeichnet durch** Füße (18), die gelenkig an der Bodenauflagebasis (4) gelagert sind und die jeweils eine verstellbare Stange (22) umfassen, um das horizontale Niveau der Basis zu gewährleisten.

4. Vorrichtung nach einem der Ansprüche 1 bis 3, **dadurch gekennzeichnet, dass** jede Stützstruktur (10) für Solarpaneele von einem Verkleidungsblech (63) bedeckt ist, das unter der Struktur angesetzt ist, derart dass in der Verwendungsposition der Vorrichtung das Blech sich unter den Solarpaneelen (64) befindet, wenn diese exponiert sind, während in der Transportposition der Vorrichtung, in der die Solarpaneele hin zum Inneren der Vorrichtung ausgerichtet sind, das Verkleidungsblech hin zur Außenseite der Vorrichtung ausgerichtet ist.

5. Vorrichtung nach Anspruch 4, **dadurch gekennzeichnet, dass** Solarpaneele (64) in der Transportposition der Vorrichtung auf einer selben bestimmten Stützstruktur (10) gestapelt sind, und dadurch, dass die bestimmte Stützstruktur ausfahrbare Elemente (66) auf beiden Seiten der Struktur umfasst, wenn diese in der Verwendungsposition der Vorrichtung ausgefahren ist, sodass sie als Unterstützungsstruktur für jedes der anfänglich gestapelten Solarpaneele dient.

6. Vorrichtung nach Anspruch 4 oder 5, **dadurch gekennzeichnet, dass** die Stützstruktur (10) auf zwei entgegengesetzten Seiten der Vorrichtung an ihrem der Bodenauflagebasis (4) entgegengesetzten Ende eine gelenkig gelagerte Klappe (68) umfasst, die eine Stütze bildet, wenn die Stützstruktur in der Verwendungsposition der Vorrichtung heruntergeklappt ist, und die einen Teil einer oberen Haube des Schutzkäfigs bildet, wenn die Stützstruktur in der Transportposition der Vorrichtung aufgestellt ist.

7. Netz von Überwachungsvorrichtungen (2) nach einem der Ansprüche 1 bis 6, wobei der Detektionskopf (8) ein Bildaufnahmegerät und eine Einrichtung zur starken Beleuchtung umfasst, wobei das Bildaufnahmegerät von einer der Vorrichtungen des Netzes unter gleichzeitiger Verwendung der Beleuchtungsvorrichtung einer anderen Vorrichtung des Netzes verwendet wird, wobei die zwei Vorrichtungen hin zu einem selben Überwachungspunkt ausgerichtet sind.

## Claims

1. A monitoring beacon which comprises a ground seat base (4) on which is provided a telescopic deployment mast (6), as well as an intrusion sensing head (8) mounted at one end of said mast, **characterized in that** the monitoring beacon comprises support frames for solar panels (10) being swivellingly mounted on the ground seat base, said beacon being configured to take a transport position, in which said panel support frames are arranged upright to form a protective cage for the beacon, solar panels mounted above said support frames being then directed towards the interior of the beacon, and an operating position, wherein said frames are folded flat around the ground seat base so as to release the mast (6) and the associated sensing head (8), said solar panels being then exposed;
said beacon comprising means for communicating with a management center among which a movable antenna (48) which is provided on the telescopic mast (6) by means of a turret (46) mounted for rotation around said mast, and **in that** said sensing head (8) is articulately mounted at the mast end, independently from said movable antenna;
the movable antenna (48) extending along the telescopic mast (6), a housing (74) being provided into said ground seat base (4) to receive a part of the antenna when the mast is retracted; and
said monitoring beacon comprising a capacitive sensor (75) arranged in the vicinity of said housing (74) and configured to deliver information relating to the presence of the movable antenna into said housing (74).

2. The beacon according to claim 1, **characterized in that** the communicating means further comprise a fixed antenna (70) which is configured to continuously transmit and receive low flow information while the movable antenna (48) is only actuated according to said information to transmit high flow information.

3. The beacon according to claim 1 or 2, **characterized by** feet (18) articulately mounted on the ground seat base (4) and which respectively include an adjustable stem (22) to provide the horizontal level of the base.

4. The beacon according to one of claims 1 to 3, **characterized in that** each solar panels (10) support frame is covered with a cover sheet (63) which is provided below of the frame, so that, in the operating position of the beacon, said sheet is located under the solar panels (64) when those are exposed while, in the transport position of the beacon, where the solar panels are directed towards the interior of the beacon, the cover sheet is directed towards the beacon outside.

5. The beacon according to claim 4, **characterized in that** solar panels (64) are stacked on the same given support frame (10), in the transport position of the beacon, and **in that** said given support frame includes spreadable elements (66) on both sides of the frame when this one is deployed in the operating position of the beacon, to be used as an auxiliary frame for each of the initially stacked solar panels.

6. The beacon according to claim 4 or 5, **characterized in that** on two opposite sides of said beacon, the support frame (10) includes at its end opposed to the ground seat base (4) an articulated flap (68) which forms a crutch when the support frame is folded in the operating position of the beacon, and which forms a part of an upper hood of the protective cage when the support frame is standing up in the transport position of the beacon.

7. A network of monitoring beacons (2) according to one of claims 1 to 6, wherein
the sensing head (8) includes a camera device and an intense lighting device, the camera of one of the network beacons being used by simultaneously using the illumination device of another beacon of the network, the two beacons being directed towards the same monitoring point.
